# EUROPÄISCHE PATENTANMELDUNG

(11) **EP 1 933 169 A1**
(43) Veröffentlichungstag der Anmeldung: **18.06.2008**
(21) Anmeldenummer: 07018683.8
(22) Anmeldetag: 24.09.2007
(51) Int. Cl.: G01T 1/167

(54) **Handmetalldetektor**

(30) Priorität: 13.12.2006 DE 202006018938 U
(71) Anmelder: Vallon GmbH, 72800 Eningen (DE)
(72) Erfinder: Vallon, Gerhard, 72800 Eningen (DE); Brucksch, Joachim, 72127 Kusterdingen (DE)
(74) Vertreter: Klocke, Peter

(57) **Zusammenfassung**

Die vorliegende Erfindung betrifft einen Handmetalldetektor (1) zur Personenkontrolle, mit einem Sondenteil (2) zur Aufnahme einer als Detektorwicklung (3') ausgebildeten Metalldetektionssonde (3) und mit einem daran anschließenden Schaft (4) als Griff zur Aufnahme von Anzeigeelementen (8, 9) und Bedienelementen (10, 11, 12) sowie einer Metalldetektionselektronik (14). Zusätzlich zu der Metalldetektionssonde (3) ist der Handmetalldetektor (1) mit einer Strahlendetektionssonde (7) mit zugehöriger Strahlendetektionselektronik (15) ausgestattet, wobei die Strahlendetektionssonde (7) vorzugsweise von einem Szintillationsdetektor gebildet ist. Die Metall- (14) und Strahlendetektionselektroniken (15) sind mit einem differenzierenden Melde- und Alarmsystem gekoppelt.

## Beschreibung

Die vorliegende Erfindung betrifft einen Handmetalldetektor zur Personenkontrolle, mit einem ring-, stab- oder tellerförmigen Sondenteil zur Aufnahme einer als Detektorwicklung ausgebildeten Metalldetektionssonde und einem daran anschließenden Schaft als Griff zur Aufnahme von Anzeigeelementen und Bedienelementen sowie einer Metalldetektionselektronik.

Derartige Handmetalldetektoren sind an sich bekannt und in einer Vielzahl von Ausführungsformen verfügbar. Beispielhaft wird hierzu auf die DE 20 2004 006 336 U1 verwiesen. Handmetalldetektoren der eingangs genannten Art werden üblicherweise zur Personenkontrolle, beispielsweise an Flughäfen eingesetzt. Mit diesen Metalldetektoren können von Reisenden mitgeführte metallische Gegenstände geortet werden, interessant sind insbesondere solche, die für eine Bedrohung von Personen und/oder zur Manipulation an Einrichtungen geeignet sind. Neben gefährlichen Schuss- und Stichwaffen sowie Sprengkörpern, die so detektiert werden können, geht auch eine Gefahr von eventuell mitgeführten radioaktiven Stoffen aus, die nur mit einer Strahlendetektionssonde detektierbar sind. Der Ausschluss dieser Gefahr erfordert jedoch in der Regel eine weitere Personenkontrolle mit einem Strahlendetektor für ionisierende Strahlung, in Körpernähe der zu kontrollierenden Person, da die radioaktive Strahlung oft nur eine geringe Intensität bzw. ein geringe Reichweite aufweist. Dieser zusätzliche Aufwand ist jedoch für die Reisenden sowie für das Kontrollpersonal lästig und wird daher kaum durchgeführt. Insofern ist es wünschenswert, die Detektion von metallischen Gegenständen und von radioaktiver Strahlung in einer einzigen Kontrolle durchzuführen zu können.

Der vorliegenden Erfindung liegt daher die Aufgabe zugrunde, einen Handmetalldetektor zur Personenkontrolle vorzuschlagen, der eine Detektion von metallischen Materialien und/oder radioaktiven metallischen und/oder radioaktiven nicht metallischen Materialien, zusammen oder einzeln, ermöglicht.

Diese Aufgabe wird erfindungsgemäß durch einen Handmetalldetektor mit den Merkmalen des Anspruchs 1 gelöst. Weitere vorteilhafte Ausgestaltungen sind den Unteransprüchen zu entnehmen.

Der erfindungsgemäße Handmetalldetektor weist zusätzlich zu einer Metalldetektionssonde mindestens eine Strahlendetektionssonde auf. Die Strahlendetektionssonde zum Nachweis ionisierender Strahlung ist in der Nähe eines ring-, stab- oder tellerförmigen Sondenteils zur Aufnahme einer Detektorwicklung der Metalldetektionssonde, vorzugsweise im Anschluss an einen Schaft zur Aufnahme von Anzeige- und Bedienelementen bzw. einer Metalldetektionselektronik für die Metalldetektionssonde, angeordnet.

Die beiden Sonden zusammen ermöglichen die Ortung von metallischen Gegenständen und die Feststellung radioaktiver Strahlung in einem einzigen berührungslosen Abtastvorgang. Zur Personenkontrolle wird der Handmetalldetektor, wie bei bekannten Handmetalldetektoren, in einem geringen Abstand entlang dem Körper der zu kontrollierenden Person geführt. Dabei werden erkannte, metallische und/oder radioaktive Materialien der Kontrollperson akustisch und/oder optisch signalisiert. Zur Feststellung von Radioaktivität sind prinzipiell alle bekannten Strahlendetektionssonden, beispielsweise Zählrohre oder Szintillationsdetektoren, in Verbindung mit bekannten Strahlendetektionselektroniken einsetzbar. Interessant sind insbesondere solche, die eine hohe Empfindlichkeit gegenüber radioaktiver Einstrahlung aufweisen, z. B. für Alpha-, Beta-, Gamma-, Röntgen- bzw. Neutronenstrahlung, so dass der Handmetalldetektor auch als Kontaminationsprüfgerät zum Aufspüren schwach radioaktiver Spuren geeignet ist. Besonders geeignet zur Erkennung von Alpha-, Beta-, Gammastrahlen sind wegen ihrer geringen Baugröße und großer Empfindlichkeit sogenannte Szintillationsdetektoren, beispielsweise als Csl- oder Na-Ausführung. Csl-Szintillationsdetektoren haben dabei gegenüber Na-Szintillationsdetektoren den Vorteil, dass sie nicht feuchtigkeitsempfindlich sind. Derartige Szintillationsdetektoren sind zur Erkennung von Neutronenstrahlen nicht geeignet, so dass bei Bedarf ein zusätzlicher spezieller Neutronendetektor vorzusehen ist.

Vorteilhafterweise ist die mindestens eine Strahlendetektionssonde derart zu der von der Detektorwicklung aufgespannten Ebene angeordnet, dass sie eine maximale Empfindlichkeit für ionisierende Strahlung senkrecht zur Detektorwicklung aufweist. Damit weisen die Metalldetektionssonde und die Strahlendetektionssonde(n) ihre größte Empfindlichkeit in gleicher Richtung, nämlich in der üblichen Abtastrichtung von Handmetalldetektoren auf, so dass keine spezielle Ausrichtung des Handmetalldetektors zur Strahlendetektion erforderlich ist. Damit ist der erfindungsgemäße Handmetalldetektor wie gewohnt vom Kontrollpersonal handhabbar, wodurch ein sicherer Abtastvorgang bezüglich metallischen und/oder radioaktiven Materialien sichergestellt ist.

In einer anderen bevorzugten Ausführungsform des erfindungsgemäßen Handmetalldetektors ist die Strahlendetektionssonde von einem Csl-Szintillationsdetektor gebildet, der vorzugsweise in dem Schaft am Übergang zu dem Sondenteil integriert ist. Die Strahlendetektionssonde kann jedoch prinzipiell auch an einer beliebigen anderen geeigneten Stelle des Handmetalldetektors angeordnet sein. Sie kann sich komplett außerhalb des Sondenteils der Metalldetektionssonde erstrecken oder in diesen hineinragen. Dies stellt sicher, dass das Eintrittsfenster der Strahlendetektionssonde beim Abtastvorgang nicht durch die den Handmetalldetektor führende Hand der Kontrollperson abgedeckt wird. Außerdem wird damit beim Abtastvorgang die Strahlendetektionssonde, genauso körpernah wie die Metalldetektionssonde an dem Körper der zu kontrollierenden Person entlanggeführt, so dass radioaktive Materialien genauso sicher wie metallische Materialien detektiert werden.

Des Weiteren ist es vorteilhaft, die Strahlendetektionselektronik für die detektierte Strahlung sowie ein Anzeigeelement für die Intensität der Strahlung in dem als Griff ausgebildeten Schaft anzuordnen. Die Strahlendetektionselektronik kann zusätzlich zu der Metalldetektionselektronik ausgeführt sein. Es ist jedoch auch möglich, für beide eine zentrale Detektionselektronik vorzusehen. Als Anzeigeelement für die Strahlung eignet sich besonders eine LED-Kette oder auch eine LCD-Anzeige, welche die Intensität der Strahlung nach Art einer Balkenanzeige darstellt.

In einer bevorzugten Ausführungsform der Erfindung lösen detektierte Materialien einen akustischen und/oder optischen und/oder habtischen Alarm aus, wobei das ausgelöste Alarmsignal abhängig von der Masse und/oder Entfernung und/oder Art des Materials varriert. Dabei kann sich das Alarmsignal, abhängig von der Signalart, beispielsweise durch die Helligkeit und/oder die Blinkfrequenz einer Leuchtanzeige, die Lautstärke und/oder die Frequenz eines ausgesendeten Tonsignals, bzw. durch die Intensität eines Vibrationsgebers unterscheiden.

Es hat sich als sinnvoll und zweckmäßig erwiesen, die Messsignale der Metalldetektionssonde und der Strahlendetektionssonde unabhängig voneinander mit den Detektionselektroniken auswerten und mittels einem differenzierten Meldesystem den akustischen und/oder optischen und/oder habtischen Alarm auszulösen. Das akustische, optische oder habtische Signal verändert seine Intensität vorzugsweise proportional ansteigend zur Masse und/oder Entfernung und/oder Art des detektierten Stoffes.

In einer Ausgestaltung der Erfindung sind die Metalldetektionssonde und die Strahlendetektionssonde gemeinsam oder unabhängig voneinander betreibbar.

Nachfolgend wird die Erfindung anhand zweier in der Zeichnung dargestellten Ausführungsbeispiele näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale können für sich oder zu mehreren bei unterschiedlichen Ausführungsformen der Erfindung verwirklicht sein. Es stellen dar:
- Figur 1: Einen ersten erfindungsgemäßen Handmetalldetektor mit ringförmigen Sondenteil mit einem Zählrohr in einer schematischen Darstellung;
- Figur 2: Einen zweiten erfindungsgemäßen Handmetalldetektor mit ringförmigen Sondenteil mit einem Csl-Szintillationsdetektor in einer schematischen Darstellung; und
- Figur 3: Ein Blockschaltbild der Detektionselektroniken der Metall- und der Strahlendetektionssonde.

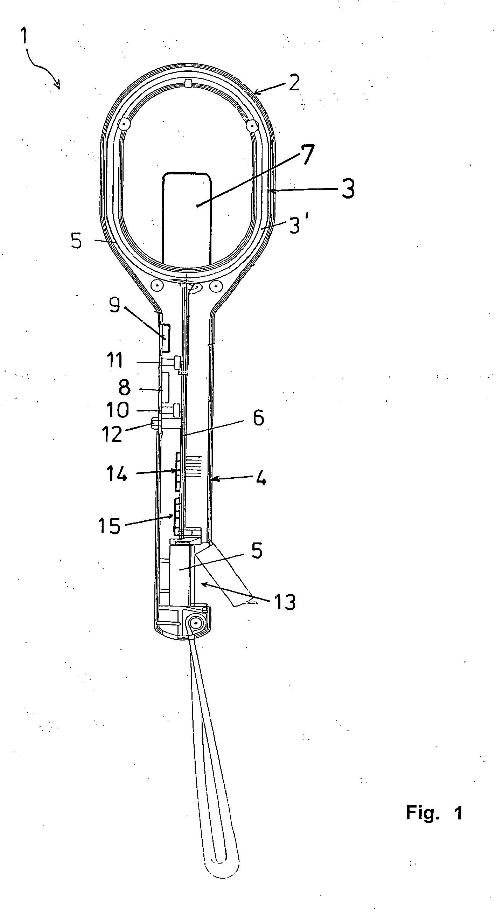

Der in Figur 1 in Draufsicht dargestellte erste Ausführungsbeispiel des erfindungsgemäßen Handmetalldetektor 1 weist eine Metalldetektionssonde 3 und eine Strahlendetektionssonde 7 auf. Die Metalldetektionssonde 3 mit einer Detektorwicklung 3' ist in einem ringförmigen Sondenteil 2 angeordnet. An einem Übergang des Sondenteil 2 zu einen daran anschließenden Schaft 4 ist ein Zählrohr als Strahlendetektionssonde 7 angeordnet, dessen Eintrittsfenster in den von der Detektorwicklung 3' begrenzten Bereich des ringförmigen Sondenteils 2 hineinragt. Das Eintrittsfenster ist derart zu der von der Detektorwicklung 3 aufgespannten Ebene vorgesehen, dass die Strahlendetektionssonde 7 ihre maximale Empfindlichkeit für eintretende ionisierende Strahlung senkrecht zur Detektorwickliung 3' aufweist. Dazu ist eine Achse der vorzugsweise zylindrischen Strahlendetektorsonde 7 parallel zu der Detektorwicklung 3' ausgerichtet, wobei sich die Strahlendetektionssonde 7 vom Schaft 4 her bis zum Zentrum des ringförmigen Sondenteils 2 erstreckt. Der an das Sondenteil 2 anschließende Schaft 4 ist als Griff ausgebildet und nimmt die übrigen, für die Funktion des Handmetalldetektors 1 notwendigen Elemente, beispielsweise die in der Zeichnung nur andeutungsweise dargestellten Metall- und Strahlendetektionselektroniken 14, 15 zusammen mit einer Spannungsquelle 5 auf. Die Detektionselektroniken 14, 15 befinden sich auf einer elektrischen Schaltungsleiterplatte 6, an die die Metalldetektionssonde 3 und auch die Strahlendetektionssonde 7 mit nicht dargestellten Anschlussdrähten angeschlossen sind. Als Bedienelemente sind eine Leuchtanzeige 8 für die Metalldetektionssonde 3 sowie eine Balkenanzeige 9 für die Strahlendetektionssonde 7, zwei Empfindlichkeitseinsteller 10, 11 für die vorgenannten Detektionssonden 3, 7 und ein Betriebsartenschalter 12 dargestellt. Als Spannungsquelle 5 sind Batterien oder Akkumulatoren in einem entsprechenden Fach 13 des Schaftes 4 angeordnet, die mit der Schaltungsleiterplatte 6 verbunden sind.

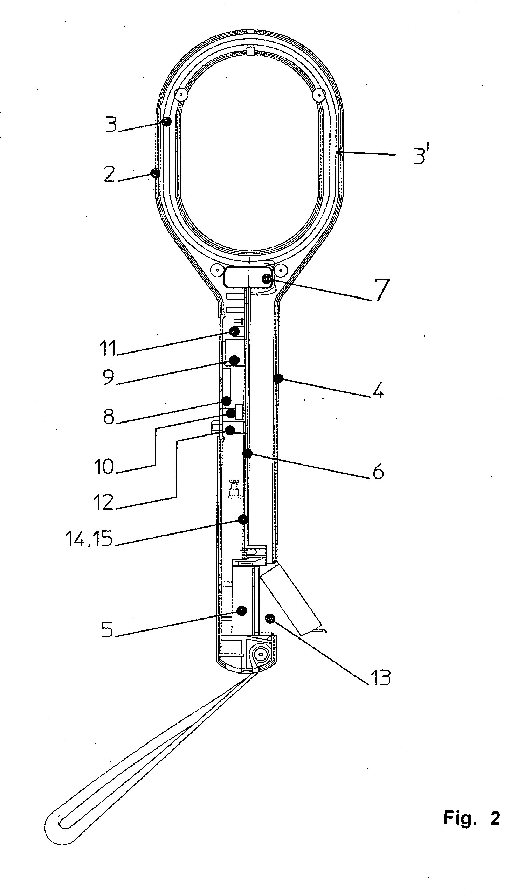

Der in Figur 2 ebenfalls in Draufsicht dargestellte zweite Ausführungsbeispiel des erfindungsgemäßen Handmetalldetektor 1 weist einen nahezu identischen Aufbau wie das in Figur 1 dargestellte erste Ausführungsbeispiel auf. Dabei wirkt statt des Zählrohres ein Csl-Szintillationsdetektor als Strahlendetektionssonde 7. Auf Grund der geringeren Baugröße des Szintillationsdetektors ist die Strahlendetektionssonde 7 vollständig in den Schaft 4 am Übergang zum Sondenteil 2 integriert. Sie ragt nicht in den von der Detektorwicklung 3' begrenzten Bereich des ringförmigen Sondenteils 2 hinein.

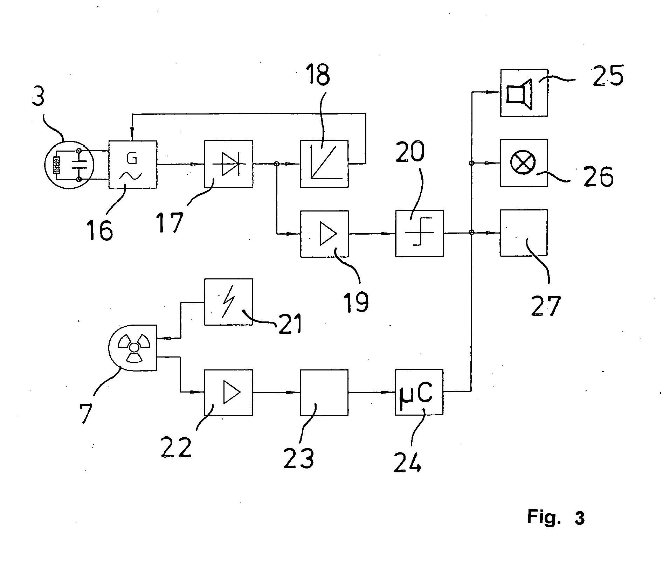

Figur 3 zeigt ein Blockschaltbild der Detektionselektroniken 14, 15 der Metall- 3 und der Strahlendetektionssonde 7. Die Detektionselektroniken 14, 15 werten die Signale der Metall- 3 und der Strahlendetektionssonde 7 unabhängig voneinander aus. Dazu weist die Metalldetektionselektronik 14 aufeinander folgend einen Oszillator 16, einen Gleichrichter 17, einen Integrator 18 zur Signalaufbereitung sowie einen Verstärker 19 mit anschließenden Komparator 20 zur Signalauswertung auf und die Stahlendetektionselektronik 15 einen Vorverstärker 22, auf den ein Diskriminator 23 und anschließend ein Mikrocontroller 24 folgt. Für den Betrieb der Strahlendetektionssonde 7 ist außerdem ein Hochspannungsgenerator 21 vorgesehen. Der Komparator 20 und der Mikrocontroller 24 sind mit einen akustischen Alarmgeber 25, einem optischen Alarmgeber 26 und einem Vibrations-Alarmgeber 27 gekoppelt. Das Tonsignal der Stahlendetektionselektronik 15 im deutlichen Unterschied zu dem Tonsignal der Metalldetektionselektronik 14, z.B. durch Zerhacken des Tonsignals des Metalldetektors oder als extra pulsierender Ton mit gleicher oder veränderter Frequenz. Dabei ist das Tonsignal der Metalldetektionselektronik 14 proportional ansteigend zu der Masse und der Entfernung des erkannten metallischen Stoffes. Ebenso ist beim optischen Alarm der Metalldetektionselektronik 14 die Helligkeit der LED-Leuchtanzeige 8 gesteuert. Zusätzlich zum optischen Alarm erfolgt die Auslösung des Vibrationsalarms.

## Patentansprüche

1. Handmetalldetektor (1) zur Personenkontrolle mit einem ringförmigen, stabförmigen oder tellerförmigen Sondenteil (2) zur Aufnahme einer als Detektorwicklung (3') ausgebildeten Metalldetektionssonde (3) und einem daran anschließenden Schaft (4) als Griff zur Aufnahme von Anzeigeelementen (8) und Bedienelementen (10, 12) sowie einer Metalldetektionselektronik (14), **dadurch gekennzeichnet, dass** im Sondenteil (2) mindestens eine Strahlendetektionssonde (7) zum Nachweis ionisierender Strahlung angeordnet ist.

2. Handmetalldetektor nach Anspruch 1, **dadurch gekennzeichnet, dass** die Strahlendetektionssonde (7) derart zu der von der Detektorwicklung (3') der Metalldetektionssonde aufgespannten Ebene angeordnet ist, dass sie eine maximale Empfindlichkeit senkrecht zu Detektorwicklung (3') aufweist.

3. Handmetalldetektor nach Anspruch 1 oder 2, **dadurch gekennzeichnet, dass** die Strahlendetektionssonde (7) von einem Szintillationsdetektor gebildet ist, der vorzugsweise in dem Schaft (4) am Übergang zu dem Sondenteil (2) integriert ist.

4. Handmetalldetektor nach einem der vorangegangenen Ansprüche,
**dadurch gekennzeichnet, dass** in dem Schaft (4) eine Strahlendetektionselektronik (15) für die detektierte Strahlung mit einem Empfindlichkeitseinsteller (11) sowie ein Anzeigeelement (9) für die Intensität der Strahlung angeordnet ist.

5. Handmetalldetektor nach einem der vorangegangenen Ansprüche,
**dadurch gekennzeichnet, dass** detektierte Materialien einen akustischen und/oder optischen und/oder habtischen Alarm auslösen, wobei das ausgelöste Alarmsignal abhängig von der Masse und/oder Entfernung und/oder Art des Materials varriert.

6. Handmetalldetektor nach einem der vorangegangenen Ansprüche,
**dadurch gekennzeichnet, dass** die Detektionselektroniken (14, 15) die Messsignale der Metalldetektionssonde (3) und der Strahlendetektionssonde (7) unabhängig voneinander auswerten und mittels einem differenzierten Meldesystem einen akustischen und/oder optischen und/oder habtischen Alarm auslösen.

7. Handmetalldetektor nach einem der vorangegangenen Ansprüche,
**dadurch gekennzeichnet, dass** die Metalldetektionssonde (3) und die Strahlendetektionssonde (7) gemeinsam oder unabhängig voneinander betreibbar sind.
